Europäisches Patentamt

European Patent Office

Office européen des brevets

(11) Veröffentlichungsnummer: **0 331 885 B1**

# (12) EUROPÄISCHE PATENTSCHRIFT

(45) Veröffentlichungstag der Patentschrift :
**14.08.91 Patentblatt 91/33**

(21) Anmeldenummer : **89100920.1**

(22) Anmeldetag : **20.01.89**

(51) Int. Cl.⁵ : **F01N 3/02, F01N 3/28,**
**B01D 46/12, B01D 46/24,**
**B01D 39/20, B01J 35/04**

(54) **Abgasfilter.**

(30) Priorität : **10.03.88 DE 3807917**
**30.05.88 DE 3818281**

(43) Veröffentlichungstag der Anmeldung :
**13.09.89 Patentblatt 89/37**

(45) Bekanntmachung des Hinweises auf die
Patenterteilung :
**14.08.91 Patentblatt 91/33**

(84) Benannte Vertragsstaaten :
**AT BE DE ES FR IT NL SE**

(56) Entgegenhaltungen :
**EP-A- 0 154 145**
**EP-A- 0 158 625**
**EP-A- 0 220 505**
**DE-A- 3 544 404**

(56) Entgegenhaltungen :
**FR-A- 2 536 301**
**US-A- 3 984 044**
**US-A- 4 687 579**
**CHEM. ING. TECH., Band 48, Nr. 5, Mai 1976,**
**Seiten 410-416; G. HOFFMANN et al.:**
**"Eigenschaften und Anwendung gesinterter,**
**korrosionsbeständiger Filterwerkstoffe"**

(73) Patentinhaber : **Schwäbische Hüttenwerke**
**Gesellschaft mit beschränkter Haftung**
**Wilhelmstrasse 67 Postfach 3280**
**W-7080 Aalen-Wasseralfingen (DE)**

(72) Erfinder : **Härle, Hans A. Dipl.-Ing.**
**Röttingerstrasse 38**
**W-7085 Bopfingen (DE)**

(74) Vertreter : **Lorenz, Werner, Dipl.-Ing.**
**Fasanenstrasse 7**
**W-7920 Heidenheim (DE)**

## Beschreibung

Die Erfindung betrifft einen Abgasfilter zur Beseitigung von schädlichen Bestandteilen aus Abgasen, insbesondere aus den Abgasen von Verbrennungsmotoren, wie z.B. eines Dieselmotores, mit einem Filterkörper, der mit einer Vielzahl von Einlaß- und Auslaßkanälen versehen ist, wobei die Einlaßkanäle durch Reaktionsräume bildende Filterwände von den Auslaßkanälen getrennt sind, und wobei der Filterkörper hochtemperaturbeständiges Sintermaterial aus Legierungsstahlpulver aus Metalldraht oder Metallspänen aufweist, die formgepreßt und nach dem Formen gesintert sind.

Zur Beseitigung von z.B. Ruß als Schadstoff aus Abgasen, was insbesondere Dieselmotore betrifft, sind Rußfilter aus keramischem Werkstoff bekannt. Dabei ist der Rußfilter im allgemeinen nach dem Auslaßkrümmer des Verbrennungsmotores in die Auspuffanlage geschaltet. Die heißen Motorabgase strömen in die Einlaßkanäle des Filterkörpers ein, durchdringen die porösen, die Kanäle umgebenden Filterwände und werden anschließend über die Auslaßkanäle wieder abgeleitet. Aufgrund der hohen Temperatur wird der Ruß, d.h. der Kohlenstoff, in den Filterwänden in Gase und Asche umgewandelt, welche dann zusammen mit dem Abgas aus dem Auspuff ausgeblasen wird.

Der besondere Nachteil keramischer Filter ist deren spezielle Porosität, insbesondere die Porengrößenverteilung und runde Porenform, wodurch die Rußabscheidung bestimmt aber auch begrenzt wird. Einer wesentlichen Veränderung der Porosität stehen die speziellen Strukturmerkmale des keramischen Werkstoffes entgegen.

Keramische Filterkörper haben auch andere Nachteile. Insbesondere sind sie empfindlich gegen rasche Temperaturänderungen, örtliche Überhitzungen durch die Abgase aufgrund ihrer schlechten Wärmeleitfähigkeit und gegen Stöße und Schläge. Dies bedeutet, daß der Filterkörper gegen Einflüsse von außen von einem temperatur- und schlagisolierendem Material, im allgemeinen Steinwolle, umgeben sein muß, welches wiederum von einem Gehäuse umschlossen ist. Aus diesem Grunde nehmen die bekannten Rußfilter relativ viel Platz ein, was häufig aufgrund der zumeist vorhandenen engen Platzverhältnisse im Motorraum eines Fahrzeuges zu Problemen führen kann.

Probleme bereiten Keramikfilter auch beim Recycling, wenn sie mit katalytischen Metallen, wie z.B. Platin, Rhodium, Vanadium oder Palladium beschichtet sind. Diese Metalle müssen auf mühsame Weise beim notwendigen Recycling von dem Keramikkörper wieder entfernt werden. Da hinzu kommt, daß auch die Lebensdauer von derartigen Keramikkörpern aufgrund ihrer Belastung begrenzt ist, stellt dieses Problem einen hohen Kostenfaktor dar, der bereits bei der Herstellung bzw. beim Verkauf derartiger Keramikkörper berücksichtigt werden muß.

Bekannt sind auch bereits Abgaskatalysatoren, die durch katalytische Wirkung weitere schädliche Bestandteile, wie z.B. Kohlenmonoxyd, Kohlenwasserstoffe und Stickoxyde, aus dem Abgas entfernen. Hierzu werden z.B. Filter mit Beschichtungen aus Platin, Rhodium, Vanadium oder anderen katalytisch wirkenden Werkstoffen verwendet. Solche Filter auf Keramikbasis sind jedoch sehr teuer und darüberhinaus empfindlich.

In der EP-A-220505 ist ein Filter zur Reinigung von Abgasen beschrieben, wobei als Filtermaterial poröses Keramik, Drahtgeflecht oder im Wickelverfahren hergestelltes Material verwendet wird. Das daraus hergestellte Filterelement besitzt eine hohe Porosität und kann zusätzlich auch noch eine katalytische Beschichtung aufweisen.

Besteht das Filterelement aus porösem Keramik, so liegen die o.a. Nachteile vor. Die Ausbildung aus einem Drahtgeflecht oder die Herstellung im Wickelverfahren hat den Nachteil, daß deren Formgebung Beschränkungen unterworfen ist. Außerdem ist keine gute Wärmeleitfähigkeit vorhanden und der Filter selbst ist sehr voluminös und schwer.

Aus Chem.-Ing.-Tech. 43 Jahrgang 1976 / Nr. 5 ist ein Filter bekannt, der aus hochtemperaturbeständiges Sintermaterial besteht, wobei Legierungsstahlpulver, Metalldraht oder Metallspäne formgepreßt und nach dem Formen gesintert sind.

Aus der US-A-4687579 ist ein Filterkörper aus gesintertem Material bekannt, der gemäß Figur 5a aus einem mäanderförmig gefalteten Band besteht, wobei dazwischengelegte Abstandteile in Wellenform für den notwendigen Abstand zwischen den einzelnen Lagen sorgen und die Ein- und Auslaßkanäle bilden. Das Verfahren zur Herstellung eines derartigen Filters ist jedoch relativ aufwendig und er besteht aus mehreren unterschiedlichen Teilen.

Der vorliegenden Erfindung liegt die Aufgabe zugrunde einen Abgasfilter der eingangs erwähnten Art zu schaffen, der bei einer einfachen Herstellung eine hohe Wirksamkeit besitzt, sehr robust ist und dessen Filterkörper in seiner Gestalt sehr variabel ist.

Erfindungsgemäß wird diese Aufgabe dadurch gelöst, daß der Filterkörper aus mehreren identischen Formteilen gebildet ist, wobei die Formteile jeweils eine Reihe von Kanälen aufweisen, die je nach Zusammenstellung Einlaßkanäle oder Auslaßkanäle bilden und jedes Formteil aus einer Platte mit mehreren in eine Längswand eingeformte und durch Stege voneinander getrennte Kanäle gebildet ist, wobei die Kanäle zur Bildung einer Einlaß- bzw. Auslaßöffnung jeweils auf einer Stirnseite offen und auf der gegenüberliegenden Stirnseite durch Querstege geschlossen sind, und daß die Formteile derart zusammengefügt sind, daß die Kanäle jeweils durch die der kanalseitigen Längswand gegenüberliegende Längswand des benachbarten Formteiles abgedeckt sind.

Dadurch, daß ein Filterkörper aus mehreren identischen Formteilen zusammengesetzt ist, läßt sich dieser entsprechend den Anforderungen und der benötigten Größe bausteinartig zusammensetzen, wodurch eine entsprechende Herstellungsvereinfachung und damit Verbilligung erreicht wird.

Die einzelnen Formteile können dabei einzeln gesintert und anschließend zusammengefügt werden oder nach der Formgebung gemeinsam zu einem monolithischen Filterkörper gesintert werden und bilden auf diese Weise eine feste und homogene Filterkörpereinheit.

Durch die Herstellung des Filterkörpers als Sinterformteil ist man in der Ausgestaltung und Form der Kanäle weitgehen variabel und kann diese optimal an die jeweiligen Verhältnisse anpassen.

Die Form der Kanäle kann grundsätzlich beliebig sein.

So können z.B. auch unterschiedliche Geometrien für Eingangskanäle, an denen sich Ruß anlegt, und für Ausgangskanäle gewählt werden. Dadurch läßt sich der Filter optimal an die gestellten Anforderungen anpassen.

Durch die identische Ausgestaltung der Formteile ist praktisch lediglich ein einziges Formteil notwendig, wobei je nach Zuordnung bzw. Aneinanderreihung der einzelnen Platten jede Platte sowohl einlaß- als auch auslaßseitig verwendet werden kann.

Der erfindungsgemäße Filterkörper aus Sinterteilen ist relativ unempfindlich gegen Temperaturschocks und Schläge oder Stöße. Ein weiterer entscheidender Vorteil gegenüber den bekannten Filterkörpern besteht darin, daß sich das Material in beliebiger Form zusammenfügen läßt. Dies bedeutet, daß der Filter stets optimal an die vorhandenen Platzverhältnisse angepaßt werden kann. So sind z.B. quadratische, rechteckige oder ovale Formen oder auch beliebig andere Formgebungen möglich.

Ein weiterer Vorteil des erfindungsgemäßen Filterkörpers besteht darin, daß er eine relativ hohe Wärmeleitfähigkeit bei gleichzeitig hoher innerer Oberfläche besitzt, wodurch die Vergasung der Rußteile wegen der besseren Verteilung auf den Einzelfasern begünstigt wird.

Die hohe Oberfläche des Filters, kombiniert mit einer guten Wärmeleitfähigkeit, verursacht durch brückenartige Teilversinterung garantiert eine gleichmäßige Temperaturverteilung im Filter, wodurch die Verbrennung des abgeschiedenen Kohlenstoffes auch bei verhältnismäßig niedrigeren Temperaturen über das gesamte Volumen gleichmäßig abläuft und Druckschwankungen im Filter vermeidet.

Die hohe Oberfläche des Filters läßt über die genannten Vorteile hinaus zusätzlich die katalytische Wirkung voll zur Geltung kommen, wodurch die Umsetzung des festen Rußes in gasförmige Produkte bei niedrigeren Temperaturen als sonst abläuft.

Mit den vorstehend geschilderten Vorteilen besitzt der erfindungsgemäße Filter einen sehr guten Wirkungsgrad.

Insbesondere im Vergleich zu Keramikfilter liegen folgende Vorteile vor:

Durch die wahllos übereinander geschichteten Metallfasern, die anschließend an ihren Berührungsstellen zusammengesintert sind, ergibt sich eine sehr große Oberfläche bei guter Wärmeleitung, d.h. exzellente Temperaturverteilung. Der Rußfilter wird dadurch sehr schnell und gleichmäßig warm.

So wurde z.B. festgestellt, daß eine Rußkonversion bzw. Rußvergasung bereits bei Temperaturen von ca. 250 bis 300 Grad eintritt, wonach bei ca. 350 bis 400 Grad eine Rußkonversion von 50% und bei ca. 600 bis 680 Grad bereits eine nahezu 100%ige Rußkonversion erreicht wird. Überraschenderweise ist dabei insbesondere der schnelle Anstieg der Wirksamkeit im unteren Temperaturbereich. Im Vergleich dazu tritt eine Rußkonversion bei bekannten Rußfiltern erst in einem Bereich von über 400 Grad auf, eine 50%ige Rußkonversion wird erst in einem Temperaturbereich von ca. 500 bis 600 Grad erreicht und eine weitgehend vollständige Rußkonversion tritt erst im allgemeinen bei Temperaturen von über 750 Grad auf.

Diese bessere Wirksamkeit ist insbesondere für Dieselfahrzeuge von Vorteil, die häufig auf Kurzstrecken, d.h. mit einem kalten Motor betrieben werden, wobei herkömmmliche Keramikfilter nahezu unwirksam sind.

In vorteilhafter Weise wird man den Stahlbehälter als Gehäuse für den Filter an die Formteile bzw. Sinterteile ansintern. Auf diese Weise bekommt man eine kompakte Einheit und einen Rußfilter, der aufgrund seiner Homogenität und Einheitlichkeit großen Belastungen standhalten kann.

Die Formteile können hochtemperaturbeständige Legierungsstahlpulver mit z.B. Chrom und/oder Molybdän, Mangan, Co, Nickel als Legierungsbestandteile aufweisen.

Auf diese Weise wird eine hohe Temperaturbeständigkeit und Standfestigkeit des Filterkörpers erreicht. Gegebenenfalls können dabei auch katalytische Wirkungen des Filters zur Umwandlung weiterer schädlicher Abgaskomponenten, wie z.B. Kohlenmonoxyd, Kohlenwasserstoffen und Stickoxyden, entstehen. Damit wird

EP 0 331 885 B1

in vorteilhafter Weise der Anwendungsbereich des erfindungsgemäßen Filters erweitert.

Um gezielt neben der Entfernung von Ruß aus den Abgasen zusätzlich auch noch weitere umweltschädliche oder giftige Bestandteile entfernen zu können, kann man den erfindungsgemäßen Abgasfilter in vorteilhafter Weise auch mit katalytisch wirkenden Werkstoffen versehen. Hierzu können z.B. die Sinterteile mit Platin, Rhodium, Vanadium, Palladium oder dergleichen z.B. beschichtet werden, womit zusätzlich noch Kohlenmonoxyde, Kohlenwasserstoffe und Stickoxyde aus dem Abgas abgeschieden werden können.

Wenn der Sinterkörper erfindungsgemäß aus Metalldraht oder Metallspänen hergestellt wird, dann wird ein Teil mit sehr geringer Dichte bei hoher Werkstoffestigkeit geschaffen. Dies bedeutet, daß auf diese Weise hergestellte Sinterteile eine hohe Aufnahmefähigkeit für Infiltrationen bzw. für eine Durchströmung besitzen, womit sie für den vorgesehenen Anwendungsfall noch besser geeignet sind.

Verwendete Metalldrahtstücke oder Metallspäne können Durchmesser bzw. Breiten von 0,1-5 mm und Längen von ca. 0,5-30 mm, vorzugsweise von 1-3 mm bzw. von 2-10 mm besitzen. Ebenso können ein oder mehrere entsprechend lange Metalldrähte zu einem Geflecht oder Gewirk verwoben oder geflochten werden. In diesem Fall kann man ggf. durch eine Elektroverschweißung eine Verbindung des Geflechtes bzw. Gewirkes zu einer Einheit in einem sinterähnlichen Vorgang erreichen. Bei dieser Ausgestaltung ist der Durchflußwiderstand noch geringer.

Statt einer Beschichtung der Sinterteile mit katalytisch wirkenden Werkstoffen kann in einer anderen sehr vorteilhaften Weiterbildung der Erfindung vorgesehen sein, daß ein wenigstens teilweise aus einem katalytisch wirkenden Werkstoff der o.a. Art oder damit beschichteter Werkstoff in den oder die Filterkörper eingeschoben oder in Strömungsrichtung vor bzw. hinter diesen angeordnet ist.

Der Werkstoff kann dabei aus Metalldrähten gebildet sein, die sich z.B. in Form von Sonden in axialer Richtung in dem bzw. durch den Filterkörper erstrekken. Sie können dabei ringförmig angeordnet werden und z.B. von der vorderen Stirnseite her in den Filterkörper eingeschoben werden. Wenn sie sich im Laufe der Zeit verbrauchen, können die Drahtsonden bei Bedarf in einem Wartungsrhythmus für das Fahrzeug ausgetauscht werden.

Alternativ hierzu kann der katalytisch wirkende Werkstoff oder mit einem katalytischen Werkstoff beschichtete Werkstoff auch in Form eines Drahtgewebes, von Stiften oder Stäben in Strömungsrichtung vor dem Filterkörper im Abgasweg angeordnet sein. Auf diese Weise kann von den heißen Abgasen Katalysatormaterial abgetragen werden und sich in dem Filterkörper in der Rußschicht ablagern, wo es dann als Katalysator seine Aktivität entfalten kann. Auf diese Weise wird verhindert, daß die Katalysatorwirkung mit zunehmender Rußschicht in dem Filterkörper abnimmt. Auch bei dieser Ausgestaltung läßt sich verbrauchtes Katalysatormaterial bei einem Kundendienst leicht überprüfen und ggf. austauschen, wobei der Austausch auf einfache Weise erfolgen kann.

Nachfolgend sind Ausführungsbeispiele der Erfindung anhand der Zeichnung prinzipmäßig näher beschrieben.

Es zeigt :

Figur 1 :     Ausschnittsweise Draufsicht auf einen erfindungsgemäßen Abgasfilter ;
Figur 2 :     einen Schnitt nach der Linie II-II der Figur 1 ;
Figur 3 :     zwei einzelne Formteile in einem seitlichen Schnitt ;
Fig. 4 :     Seitenansicht eines Filterkörpers (ausschnittsweise) in anderer Ausgestaltung ;
Fig. 5 :     eine Seitenansicht eines Filterkörpers mit einem katalytisch wirkenden Einsatz ;
Fig. 6 :     mehrere hintereinander angeordnete Filter in Prinzipdarstellung.

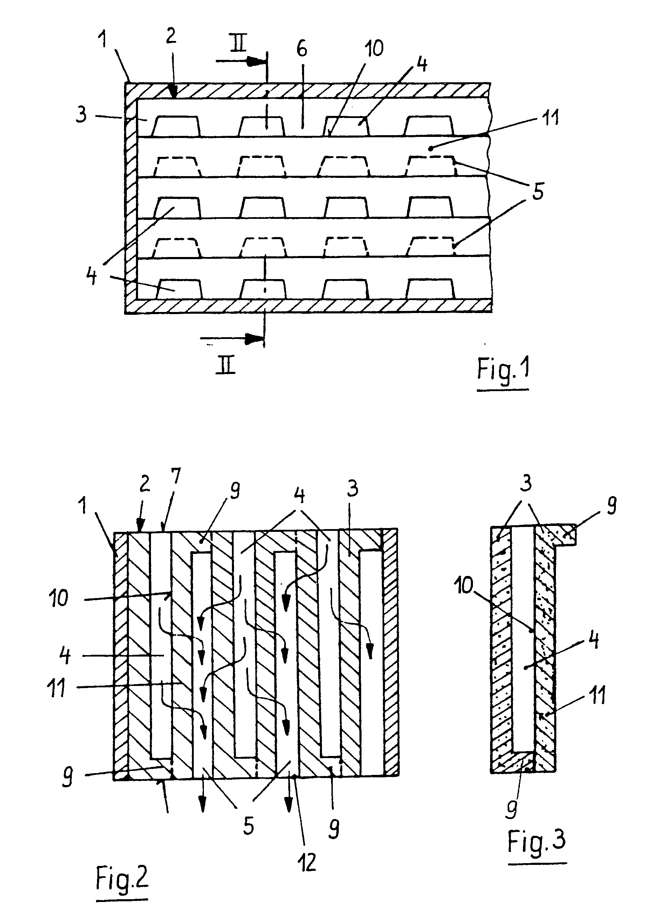

Der Abgasfilter nach den Fig. 1-3, der in dieser Form nur beispielsweise dargestellt ist, weist einen Stahlblechbehälter 1 als Umhüllung für einen Filterkörper 2 auf, der aus mehreren Platten 3 als Formteile gebildet ist. Die Formteile 3 werden zu Sinterteilen gesintert. Jedes Formteil 3 bzw. jede Platte ist mit mehreren in eine Längswand eingeformten Kanäle versehen, die je nach Anordnung — Einlaßkanäle 4 bzw. Auslaßkanäle 5 bilden. Die Kanäle verlaufen parallel zu den Seitenkanten der Platten und besitzen ungefähr eine Tiefe, die der halben Plattenbreite entspricht. Durch Stege 6 sind die einzelnen Kanäle voneinander getrennt, wobei die Stege ungefähr annähernd die gleiche Breite wie die Kanäle besitzen.

Wie aus der Figur 2 und der Einzeldarstellung der Figur 3 ersichtlich ist, sind die Kanäle 4 bzw. 5 an einer Stirnseite 7 offen, während sie an der anderen Stirnseite 8 durch einen Quersteg 9 geschlossen sind. Die Durchströmung des erfindungsgemäßen Abgasfilters erfolgt gemäß Pfeilrichtung in der Figur 2. Wie aus der gleichen Figur weiterhin ersichtlich ist, werden die offenen Seiten der Kanäle 4 bzw. 5 jeweils durch eine Längswand 10 bzw. der Rückwand, die der Längswand mit den Kanälen 4 bzw. 5 gegenüberliegt, durch benachbart liegende Platten 3 abgeschlossen. Auf diese Weise ergibt sich jeweils ein geschlossenes Kanalsystem, deren von der Einströmseite abgewandte Enden jeweils durch einen Quersteg 9 geschlossen sind. Wie aus den Pfei-

4

len der Figur 2 ersichtlich ist, strömen die Abgase über die Einlaßöffnungen 7 in die Eintrittskanäle 4 ein und durchdringen dabei die porösen Filterwände 11 der Platten 3, da jeweils die unteren Enden der Einlaßkanäle 4 durch Querstege 9 abgeschlossen sind. In den Filterwänden 11 erfolgt die chemische Reaktion des Rußes bzw. dessen Umwandlung in Gas und Asche. Von den Filterwänden 11 aus gelangen die auf diese Weise gereinigten Abgase in die Auslaßkanäle 5, welche ihre Auslaßöffnungen 12 — wie in der Figur 2 dargestellt — auf der Unterseite besitzen und auf der Eintrittseite ebenfalls jeweils durch einen Quersteg 9 abgeschlossen sind.

Die Anzahl der nebeneinander angeordneten Platten 3 kann beliebig sein. Gleiches gilt für die Anzahl der nebeneinander angeordneten Kanäle 4 bzw. 5 und damit auch der Länge der Platten 3.

Wie weiterhin aus der Figur 2 und insbesondere auch aus der Figur 3 ersichtlich ist, sind alle Platten bzw. Formteile 3 gleich ausgebildet, wobei jeweils nur entsprechend der Anordnung der einzelnen Platten zueinander Einlaßkanäle 4 bzw. Auslaßkanäle 5 gebildet werden.

In der Figur 2 sind die Trennlinien, an denen die Formteile beim Sintern miteinander verbunden wurden, gestrichelt angedeutet, während in der Figur 3 zwei Formteile vor dem Sintern dargestellt sind.

Wie aus den Figuren ersichtlich ist, sind benachbart zueinander liegende Platten jeweils um 180 Grad verdreht bzw. "Kopf an Fuß" zueinander angeordnet. Jeweils eine Rückseite 10 eines Formteiles 3 wird an das vordere Ende des benachbarten Quersteges 9 bzw. der Stege 6 angelegt.

Die Herstellung des erfindungsgemäßen Abgasfilters erfolgt derart, daß die identischen Platten bzw. Formteile 3 in einer Formpresse formgepreßt werden. Anschließend werden sie in der gewünschten Weise und Anzahl aneinander angelegt und gemeinsam gesintert. Auf diese Weise ergibt sich ein monolithischer Filterkörper 2. Anschließend oder gleichzeitig damit kann für eine entsprechend stabile und dichte Verbindung auch der Stahlblechbehälter 1 an die jeweils äußere Platte 3 angesintert werden. Im Bedarfsfalle ist es hierzu lediglich erforderlich, zwischen den sich berührenden Elementen evtl. Sinterpulver mit einem niederen Schmelzpunkt zu geben, damit ein Verbund mit den Formteilen und dem Stahlblechbehälter 1 geschaffen wird.

Die Formteile können aus hochwertigem Legierungsstahlpulver oder aus entsprechend hitzebeständigen und hochwertigen Metalldrähten oder Metallspänen bestehen, welche in gleicher Weise wie Metallpulver gesintert werden.

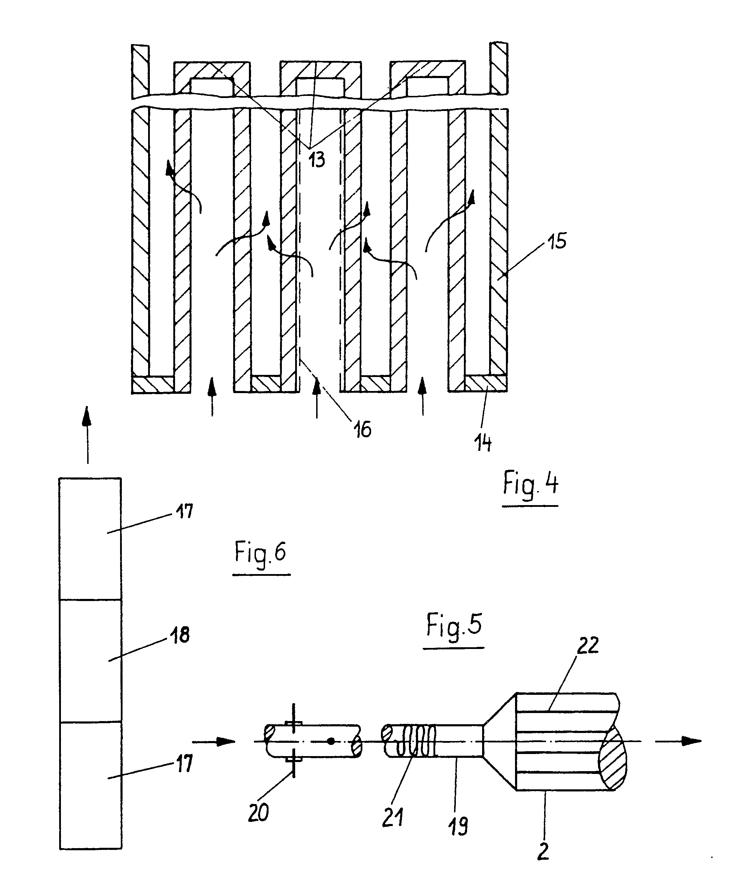

In der Fig. 4 ist eine weitere Ausgestaltung für den erfindungsgemäßen Abgasfilter dargestellt. Wie ersichtlich, besteht dieser aus mehreren nebeneinander und ggf. auch in Strömungsrichtung hintereinander angeordneten einzelnen hohlzylinderförmigen Filterkerzen 13, die vorzugsweise kreisförmig in mehreren Reihen angeordnet sind. Die Filterkerzen 13 sind auf einer Seite, nämlich der Zulaufseite, offen und auf der gegenüberliegenden Seite geschlossen. Sie können gemeinsam, ggf. auswechselbar, auf bzw. an einer Grundplatte 14 befestigt sein. Eine Umhüllungswand 15 schließt den Abgasfilter nach außen ab.

Wie ersichtlich, treten die zu reinigenden Abgase stirnseitig an den offenen Enden der zylinderförmigen Filterkerzen 13 ein, durchströmen deren Umfangswände und treten am gegenüberliegenden Ende gereinigt aus.

Wenn die Filterkerzen 13 an einer Wand, vorzugsweise der inneren Umfangswand, mit einem katalytischen Werkstoff beschichtet sind, kann im Bedarfsfalle neben der Verbrennung der Rußteile auch noch eine Umwandlung weiterer schädlicher Abgase erfolgen. Durch die gestrichelte Linie "16" in der Fig. 4 ist diese Ausgestaltung angedeutet. Selbstverständlich kann die Beschichtung auch an einer anderen Stelle vorgenommen werden.

In der Fig. 5 ist eine Ausgestaltung eines Filterkörpers 2 mit einem Einsatz aus mehreren katalytisch wirkenden Werkstoffen prinzipmäßig dargestellt. In der Abgaszuleitung 19 zu dem Filterkörper 2 sind mehrere Stifte 20 aus einem katalytisch wirkenden Werkstoff oder aus einem Grundkörper, der mit einem katalytisch wirkenden Werkstoff beschichtet ist, angeordnet. Durch die heißen Abgase wird Katalysatormaterial von den Stiften 20 abgetragen und lagert sich in dem Filterkörper 2 an den Wänden an, so daß das Material dort seine Wirkung entfalten kann. Statt oder zusätzlich zu den Stiften 20 kann in dem Abgaszuleitungsrohr 19 auch ein Gewebe 21 aus einem katalytisch wirkenden Werkstoff oder einem damit beschichteten Werkstoff angeordnet sein, das den gleichen Zweck erfüllt.

Stattdessen können in den Filterkörper auch direkt Metallsonden 22 in Drahtform, die vollständig oder teilweise aus einem katalytisch wirkenden Werkstoff bestehen oder mit diesem beschichtet sind, von einer Stirnseite, vorzugsweise von der auf der Einströmseite liegenden Stirnseite her, in axialer Richtung eingeschoben werden. Dabei können im Bedarfsfalle auch mehrere Drahtsonden 22 ringförmig angeordnet werden. Auf diese Weise lassen sich die Drahtsonden nach einer entsprechenden Abnutzung auf einfache Weise austauschen.

Art und Ausgestaltung der Metallsonden 22 können beliebig sein und jeweils vom Anwendungsfall abhängen. Zur Vereinfachung sind in der Fig. 5 alle beschriebenen Lösungen mit einem Katalysatoreinsatz eingezeichnet. Selbstverständlich sind Einsätze auch einzeln oder in abgewandelten Formen möglich.

Statt einer Ausgestaltung der Filterkörper in Plattenform, wie in den Fig. 1 bis 3 dargestellt oder in ein oder mehreren hohlzylinderförmigen Filterkerzen, können diese auch so geformt werden, daß sich im Betrieb eine schalldämpfende Wirkung ergibt. Es ist lediglich dafür zu sorgen, daß zur Umwandlung bzw. Beseitigung von schädlichen Bestandteilen aus dem Abgas genügend lange Wege und Verweilzeiten verbleiben, wobei auch Schalldämpfer und Abgasfilter aufeinander abzustimmen sind.

Der erfindungsgemäße Filterkörper läßt sich gegebenenfalls auch in Verbund mit bekannten Abgaskatalysatoren verwenden. Hier sind die verschiedensten Möglichkeiten denkbar. Wie in der Fig. 6 dargestellt, können z.B. mehrere Abgasfilter hintereinander angeordnet sein, wobei z.B. der erste ein Abgasfilter sein kann, der primär zur Verbrennung von Ruß dient, während der zweite ein Keramikfilter 18 ist. Im Bedarfsfalle können sich derartige Filter abwechseln. Selbstverständlich können die Abgasfilter auch so ausgestaltet sein, daß sie innerhalb eines Gehäuses aus unterschiedlichen Materialien, wie z.B. den erfindungsgemäßen Sinterteilen und Keramikplatten bestehen.

In diesem Falle kann die Verbindung Sinterplatte bzw. Sinterteil und Keramikplatten bzw. Metallplatte so hergestellt sein, daß Metallnocken durch Löcher in der Keramikplatte die Verbindung zur benachbarten Metallplatte herstellen und anschließend der ganze Sandwich gesintert oder gelötet wird.

Ebenso ist auch eine Anordnung möglich, wobei ineinander gestellte Rohre aus Metallfasern bzw. Keramik so zusammengesintert werden, daß sich ein entsprechend schlüssiger Verbund ergibt. Es ist lediglich sicherzustellen, daß der Verbund so fest ist, daß die Keramikplatten sich nicht innerhalb des Metallplattengerüstes bewegen und durch die Erschütterungen der Fahrzeuge zerstört werden können.

Die Befestigung des Abgasfilters gegenüber dem Gehäuse wird dabei vorteilhaft über Metallfaser- bzw. Sinterplatte erfolgen.

Selbstverständlich ist der erfindungsgemäße Abgasfilter nicht ausschließlich auf einen Einsatz für die Beseitigung bzw. Umwandlung von Abgasen aus Verbrennungsmotoren geeignet. Im Bedarfsfalle kann er auch, gegebenenfalls nach entsprechender Anpassung, für die Beseitigung von Abgasen aus Heizungs- und-/oder Verbrennungsanlagen beliebiger Art verwendet werden, wobei schädliche Abgase entstehen. Dies ist z.B. bei der Verbrennung von fossilen Brennstoffen, wie z.B. Holz, Kohle oder Erdöl der Fall.

## Patentansprüche

1. Abgasfilter zur Beseitigung von schädlichen Bestandteilen aus Abgasen, insbesondere aus den Abgasen von Verbrennungsmotoren, wie z.B. eines Dieselmotores, mit einem Filterkörper (2), der mit einer Vielzahl von Einlaß- und Auslaßkanälen (4, 5) versehen ist, wobei die Einlaßkanäle (4) durch Reaktionsräume bildende Filterwände von den Auslaßkanälen (5) getrennt sind, und wobei der Filterkörper (2) hochtemperaturbeständiges Sintermaterial (3) aus Legierungsstahlpulver, aus Metalldraht oder Metallspänen aufweist, die formgepreßt und nach dem Formen gesintert sind, **dadurch gekennzeichnet,** daß der Filterkörper (2) aus mehreren identischen Formteilen (3) gebildet ist, wobei die Formteile (3) jeweils eine Reihe von Kanälen (4, 5) aufweisen, die je nach Zusammenstellung Einlaßkanäle (4) oder Auslaßkanäle (5) bilden und jedes Formteil (3) aus einer Platte mit mehreren in eine Längswand eingeformte und durch Stege (6) voneinander getrennte Kanäle (4, 5) gebildet ist, wobei die Kanäle zur Bildung einer Einlaß- bzw. Auslaßöffnung (7 bzw. 12) jeweils auf einer Stirnseite offen und auf der gegenüberliegenden Stirnseite (8) durch Querstege (9) geschlossen sind, und daß die Formteile (3) derart zusammengefügt sind, daß die Kanäle (4, 5) jeweils durch die der kanalseitigen Längswand gegenüberliegende Längswand (10) des benachbarten Formteiles (3) abgedeckt sind.

2. Abgasfilter nach Anspruch 1, **dadurch gekennzeichnet,** daß die Formteile (3) gemeinsam zu einem einstückigen Filterkörper (2) gesintert sind.

3. Abgasfilter nach Anspruch 1 oder 2, **dadurch gekennzeichnet,** daß das Sintermaterial (3) hochtemperaturbeständige Legierungsbestandteile, wie z.B., Chrom, Molybdän, Nickel und Mangan aufweist.

4. Abgasfilter nach Anspruch 3, **dadurch gekennzeichnet,** daß die Legierungsbestandteile wenigstens teilweise katalytisch wirkende Bestandteile, wie z.B. Chrom, Platin, Rhodium, Vanadium, Palladium, Molybdän, Nickel, Kupfer oder Mangan aufweisen oder daß der Filter mit diesen Bestandteilen versehen ist.

5. Abgasfilter nach einem der Ansprüche 1-4, **dadurch gekennzeichnet,** daß wenigstens teilweise aus einem katalytisch wirkenden Werkstoff, wie z.B. Platin, Rhodium, Vanadium, Paladium o.dgl. bestehende oder damit beschichtete Werkstoffe in den oder die Filterkörper (2) eingeschoben oder in Strömungsrichtung vor diesen in Form von Stiften, Drähten (20, 22) oder eines Drahtgeflechtes (21) angeordnet sind.

## Claims

1. Exhaust gas filter for the removal of harmful constituents from exhaust gases, in particular from the exhaust gases of internal combustion engines, e.g. a diesel engine, comprising a filter body (2) provided with a plurality of intake and exhaust channels (4, 5), the intake channels (4) being separated from the exhaust channels (5) by means of filter walls forming reaction chambers, and the filter body (2) comprising high temperature resistant sintered material (3) composed of alloy steel powder, metal wire or metal chips, which are compressed and sintered after moulding, characterised in that the filter body (2) is formed of a plurality of identical moulded parts (3), the moulded parts (3) each comprising a series of channels (4, 5), which, according to their composition, form intake channels (4) or exhaust channels (5) and each moulded part (3) consisting of a plate comprising a plurality of channels (4, 5) worked into a longitudinal wall and separated from one another by means of bars (6), the channels each being open at one end face and closed at the opposing end face (8) by means of crossbars (9) in order to form an intake port or exhaust port (7 or 12), and that the moulded parts (3) are joined together in such a manner that the channels (4, 5) are each covered by the longitudinal wall (10) of the adjacent moulded part (3) lying opposite the longitudinal wall at the channel side.

2. Exhaust gas filter according to claim 1, characterised in that the moulded parts (3) are sintered together to form a filter body (2) consisting of one piece.

3. Exhaust gas filter according to claim 1 or claim 2, characterised in that the sintered material (3) comprises high temperature resistant alloying constituents, e.g. chromium, molybdenum, nickel and manganese.

4. Exhaust gas filter according to claim 3, characterised in that the alloying constituents comprise at least partly catalytic constituents, e.g. chromium, platinum, rhodium, vanadium, palladium, molybdenum, nickel, copper or manganese or that the filter is provided with these constituents.

5. Exhaust gas filter according to one of claims 1-4, characterised in that materials at least partly consisting of or coated with a catalytic material, e.g. platinum, rhodium, vanadium, palladium or the like, are inserted into the filter body or bodies (2) or are disposed in front of said filter body or bodies in the flow direction in the form of pins, wires (20, 22) or wire gauze (21).

## Revendications

1. Filtre à gaz d'échappement pour éliminer des composants nocifs de gaz d'échappement, notamment des gaz d'échappement de moteurs à combustion, par exemple d'un moteur diesel, comportant un corps de filtre (2) pourvu de plusieurs canaux d'entrée et canaux de sortie (4, 5), les canaux d'entrée (4) étant séparés des canaux de sortie (5) par des parois filtrantes qui forment des chambres de réaction, et le corps de filtre (2) comprenant un matériau fritté réfractaire (3) fait à partir de poudre d'acier allié, de fil métallique ou de copeaux métalliques qui sont moulés sous pression et frittés après le moulage, **caractérisé** en ce que le corps de filtre (2) est composé de plusieurs pièces moulées identiques (3) dont chacune comporte une rangée de canaux (4, 5) qui constituent des canaux d'entrée (4) ou des canaux de sortie (5) selon sa combinaison avec les autres, chaque pièce moulée (3) ayant la forme d'une plaque où plusieurs canaux (4, 5) sont ménagés sur une paroi longitudinale et sont séparés les uns des autres par des nervures (6), ces canaux étant ouverts à une extrémité frontale pour former une ouverture d'entrée ou de sortie (7 ou 12) et fermés par des nervures transversales (9) à l'extrémité frontale opposée (8), et en ce que les pièces moulées (3) sont assemblées de façon que les canaux (4, 5) de chaque pièce soient recouverts par la paroi longitudinale (10) opposée à la paroi du côté des canaux de la pièce moulée adjacente (3).

2. Filtre selon la revendication 1, **caractérisé** en ce que les pièces moulées (3) sont frittées ensemble pour former un corps de filtre (2) monobloc.

3. Filtre selon la revendication 1 ou 2, **caractérisé** en ce que le matériau fritté (3) comporte des composants d'alliage réfractaires, tels que par exemple le chrome, le molybdène, le nickel et le manganèse.

4. Filtre selon la revendication 3, **caractérisé** en ce que les composants d'alliage comprennent au moins en partie des composants ayant une action catalytique, tels que par exemple le chrome, le platine, le rhodium, le vanadium, le palladium, le molybdène, le nickel, le cuivre ou le manganèse, ou en ce que le filtre est pourvu de ces composants.

5. Filtre selon l'une des revendications 1 à 4, **caractérisé** en ce que des matériaux au moins partiellement constitués ou revêtus d'un matériau ayant une action catalytique, tel que par exemple le platine, le rhodium, le vanadium, le palladium ou des matériaux similaires, sont insérés dans le ou les corps de filtre (2) ou sont disposés en amont de ce ou ces corps, sous la forme de tiges, de fils (20, 22) ou d'un treillis métallique (21).

Fig.1

Fig.2

Fig.3

Fig. 4

Fig. 6

Fig. 5